# EUROPEAN PATENT APPLICATION

(11) **EP 1 879 311 A2**
(43) Date of publication of application: **16.01.2008**
(21) Application number: 07013680.9
(22) Date of filing: 12.07.2007
(51) Int. Cl.: H04H 1/00

(54) **Apparatus and method for receiving broadcast data in a portable digital broadcasting system**

(30) Priority: 12.07.2006 KR 20060065466
(71) Applicant: Samsung Electronics Co., Ltd., Suwon-si, Gyeonggi-Do (KR)
(72) Inventor: Roh, Hee-Jin, Suwon-si Gyeonggi-do (KR); Kim, Yong-Chan, Suwon-si Gyeonggi-do (KR)
(74) Representative: Lang, Johannes

(57) **Abstract**

An apparatus and method for receiving broadcast data in a portable digital broadcasting receiver. A Radio Frequency (RF) receiver receives a broadcast signal. A data demodulator demodulates the broadcast signal. Upon receipt of a broadcast-related key from a user, a controller controls the data demodulator to operate in a concentrated channel switching mode and acquire, from the broadcast signal, data of all broadcast channels including a broadcast channel selected by the user. Upon failure to receive broadcast-related key for channel switching for a predetermined time, the controller controls the data demodulator to operate in a selected channel viewing mode and acquire data of the broadcast channel selected by the user from the broadcast signal.

## Description

### BACKGROUND OF THE INVENTION

### Field of the Invention

The present invention relates generally to a digital broadcasting reception apparatus and method, and in particular, to an apparatus and method for receiving digital broadcasting in a portable terminal apparatus.

### Description of the Related Art

The recent development of audio/video data compression technology and communication technology contributes to realization of digital broadcasting that can provide high-quality audio/video services by means of fixed or mobile terminals anytime and anywhere. Commonly, the digital broadcasting refers to a broadcast service that provides high-definition, CD-class high-fidelity services to users, replacing the conventional analog broadcasting. This digital broadcasting has developed into terrestrial broadcasting and satellite broadcasting. The terrestrial broadcasting refers to a service that can transmit broadcasting by means of a terrestrial sender, while the satellite broadcasting refers to a scheme that can receive digital broadcasting using a satellite relay.

The digital broadcasting is now being developed into a scheme for providing a broadcast service even to the users on the move, and the typical portable digital broadcasting system can be classified into Digital Video Broadcasting-Handheld (DVB-H) and Digital Multimedia Broadcasting (DMB).

For example, the digital broadcasting system includes Digital Audio Broadcasting (DAB), Digital Radio Broadcasting (DRS), Digital Audio Radio System (DARS), and DMB for an integrated audio/video/data service. In addition, the DVB-H system is now attracting public attention, which has strengthened mobility and portability of a European Research Coordination Agency project-147 (Eureka 147) system, which is a European DAB system, and a DVB-Terrestrial (DVB-T) system, which is one of the digital broadcasting standards.

Receivers based on the portable digital broadcasting system should be small in size and low in power consumption compared to receivers based on the fixed digital broadcasting system, taking into account portability thereof. To meet the demand for the reduction in size and power consumption, the receivers of the portable digital broadcasting system should be realized in a different manner compared to the receivers of the fixed digital broadcasting system. Therefore, compared to the receivers of the fixed digital broadcasting system, the receivers based on the portable digital broadcasting system should be realized taking into account the important issues such as the reduction in power consumption and channel switching time delay.

### SUMMARY OF THE INVENTION

An aspect of the present invention is to address at least the problems and/or disadvantages and to provide at least the advantages described below. Accordingly, an aspect of the present invention is to provide an apparatus and method for reducing a channel switching time delay when there is a request for channel switching from a user in a receiver of a portable digital broadcasting system.

Another aspect of the present invention is to provide an apparatus and method for reducing power consumption in a receiver of a portable digital broadcasting system.

According to one aspect of the present invention, there is provided an apparatus for receiving broadcast data in a portable digital broadcasting receiver. The broadcast data reception apparatus includes a Radio Frequency (RF) receiver for receiving a broadcast signal; a data demodulator for demodulating the broadcast signal; and a controller for, upon receipt of a broadcast-related key from a user, controlling the data demodulator to operate in a concentrated channel switching mode and acquire, from the broadcast signal, data of all broadcast channels including a broadcast channel selected by the user, and upon failure to receive broadcast-related key for channel switching for a predeter-mined time, controlling the data demodulator to operate in a selected channel viewing mode and acquire data of the broadcast channel selected by the user from the broadcast signal.

According to another aspect of the present invention, there is provided a method for receiving broadcast data in a portable digital broadcasting receiver. The broadcast data reception method includes a first step of receiving a broadcast signal; a second step of determining whether a broadcast-related key is input from a user; a third step of, upon receipt of the broadcast-related key, demodulating the broadcast signal, and acquiring and storing broadcast data of all broadcast channels including a broadcast channel selected by the user; and a fourth step of, upon failure to receive the broadcast-related key for a predetermined time, demodulating the broadcast signal and acquiring broadcast data of the broadcast channel selected by the user.

### BRIEF DESCRIPTION OF THE DRAWINGS

The above and other aspects, features and advantages of the present invention will become more apparent from the following detailed description when taken in conjunction with the accompanying drawings in which:
- FIG. 1: is a schematic conceptual diagram of a DVB-H system to which the present invention is applicable;
- FIG. 2: is a conceptual diagram illustrating a time slicing-based transmission method in a DVB-H system to which a first embodiment of the present invention is applicable;
- FIG. 3: is a block diagram illustrating a structure of a general DVB-H receiver to which the first embodiment of the present invention is applicable;
- FIG. 4: is a timing diagram illustrating an operation time and a burst reception time of each individual block in a DVB-H receiver;
- FIG. 5: is a graph illustrating a reduction in power consumption with respect to a data rate in a DVB-H system where a DVB-H receiver uses time slicing;
- FIG.6: is a diagram illustrating three channel switching scenarios separately provided to estimate a broadcast channel switching time according to the first embodiment of the present invention;
- FIG. 7: is a block diagram illustrating a structure of a DVB-H receiver 700 for providing a broadcast service according to the first embodiment of the present invention;
- FIG. 8: is a diagram illustrating a key input pattern of a broadcast receiver's user according to an embodiment of the present invention;
- FIGs. 9A: and 9B are flowcharts illustrating a method for demodulating a broadcast signal in a portable digital broadcasting receiver according to the first embodiment of the present invention;
- FIG. 10: is a block diagram illustrating a structure of a CDM-based portable digital broadcasting receiver to which a second embodiment of the present invention is applicable;
- FIGs. 11A and 11B: are flowcharts illustrating a method for demodulating a broadcast signal in a portable digital broadcasting receiver according to the second embodiment of the present invention; and
- FIG. 12: is a timing diagram illustrating control signals of a time slicing controller according to the first embodiment of the present invention.

### DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness.

A description will be made separately of a broadcast service reception method and apparatus of a receiver based on a DVB-H system as an example of the portable digital broadcasting system, and a broadcast service reception method and apparatus of a receiver based on a Code Division Multiplexing (CDM) satellite DMB system as another example of the portable digital broadcasting system.

An apparatus and method capable of reducing the time required for broadcast channel switching in a DVB-H receiver will be described as a first embodiment, and an apparatus and method capable of reducing the channel switching time in a CDM satellite DMB receiver will be described as a second embodiment.

The DVB-H system has developed from the DVB-T system, which is a European High Definition Television (HDTV) broadcasting standard, into a system suitable to be applied to a portable mobile terminal, and in particular, uses a time slicing function to reduce battery consumption of the terminal. The 'time slicing' as used herein refers to a method in which a broadcast transmitter Time Division Multiplexing (TDM)-transmits various broadcast services and a terminal receives signals only at the time a particular service is transmitted, thereby reducing average power consumption. Therefore, because broadcast services of the DVB-H system each are repeatedly transmitted at intervals of a broadcast service transmission period, or a burst cycle time, a broadcast channel switching time has an attribute that it increases in proportion to the period.

A first embodiment of the present invention provides a scheme of solving the problem of the increase in the broadcast channel switching time due to the broadcast service transmission period. In addition, because the mobile terminal, unlike the fixed terminal that can be provided with sufficient power, should minimize its power consumption, the first embodiment provides a structure capable of reducing the channel switching time without increasing the power consumption.

Although the first embodiment of the present invention will be described herein based on the DVB-H system as described above, it can also be generally applied to other broadcasting systems having the attribute that broadcast services are TDM-transmitted, like the DVB-H system. In addition, the first embodiment can be applied not only to the system in which broadcast data is TDM-transmitted, but also to all broadcasting systems that need a key input for channel switching.

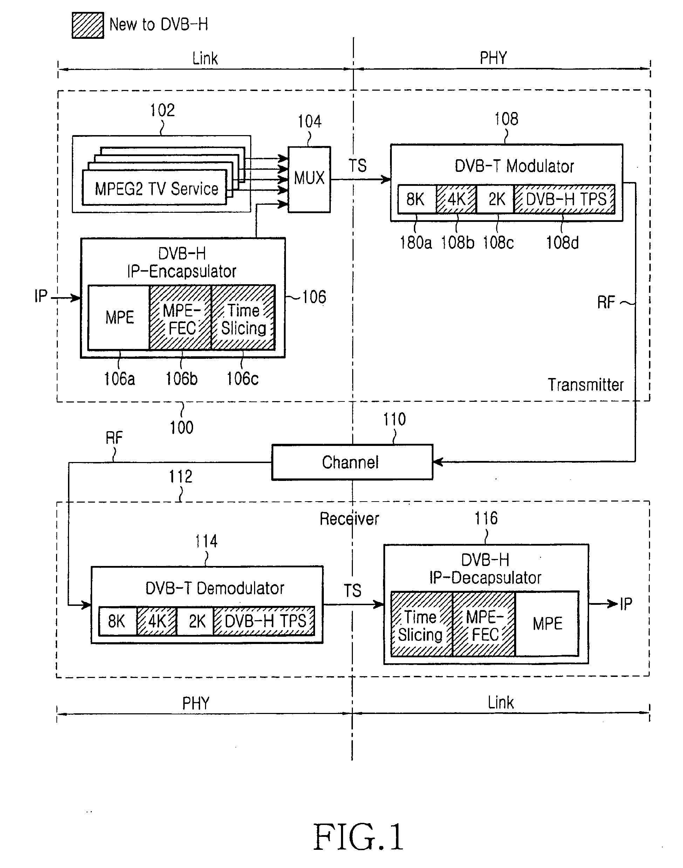

FIG. 1 is a schematic conceptual diagram of a DVB-H system to which the present invention is applicable.

Referring to FIG. 1, the DVB-H broadcasting system includes a DVB-H transmitter 100 and a DVB-H receiver 112.

The DVB-H transmitter 100, taking portability and mobility into account, has a DVB-H IP encapsulator 106 added to DVB-T that transmits multiple MPEG-2 TV services 102, as a European digital TV-based portable mobile broadcasting standard improved from the DVB-T system.

Outputs signals of the MPEG-2 TV services 102 and the DVB-H IP encapsulator 106 are multiplexed into a Transport Stream (TS) by a multiplexer (MUX) 104, and output to a DVB-T modulator 108. The shown DVB-H IP encapsulator 106 is a link layer of the DVB-H system. As to the DVB-H IP encapsulator 106, Multi-Protocol Encapsulation - Forward Error Correction (MPE-FEC) layers 106a and 106b packetize an IP datagram received to increase transmission efficiency, and a time slicing processor 106c performs a control operation of time-slicing and transmitting a packet output from the MPE-FEC layers 106a and 106b.

As described above, in the DVB-H broadcasting system, it is most important to reduce battery consumption (or power consumption) at a broadcast receiver in order to increase portability of the mobile terminal receiving a broadcast service. To this end, the DVB-H transmitter 100 introduces the time slicing technique. In addition, to increase the mobility, there is a need for improvement in reception performance of broadcast signals, and to this end, the DVB-H transmitter 100 uses the MPE-FEC layers 106a and 106b, or link layers which are upper layers of physical layers, and applies Reed-Solomon (RS) coding, making it possible to increase reception coverage even with use of one antenna. The DVB-H system encapsulates (or packetizes) data by means of the DVB-H IP encapsulator 106, thereby enabling point-to-point and point-to-multipoint broadcasting.

The DVB-T modulator 108 corresponding to a physical layer of the DVB-H transmitter 100, supports a 4K-FFT mode 108b in addition to 2K/8K-FFT modes 108c and 108a, taking both coverage and mobility into account, and uses an in-depth interleaver for the 2K/4K-FFT modes 108c and 108b, thereby obtaining time diversity and thus improving the reception performance.

In addition, the DVB-T modulator 108 includes a DVB-H Transmission Parameter Signal (TPS) transmitter 108d, and the DVB-H TPS transmitter 108d provides the DVB-H receiver 112 with information as to whether it will use MPE-FEC and whether it will use time slicing or 4K-FFT mode, depending on TPS bits.

The signal transmitted by the DVB-H transmitter 100 is received at the DVB-H receiver 112 over a channel 110. The DVB-H receiver 112 decodes the received signal in the reverse order of the DVB-H transmitter 100. For the decoding, a DVB-T demodulator 114, which is a physical layer, demodulates the received signal into a TS, and transfers the TS to a DVB-H decapsulator 116, and the DVB-H decapsulator 116 decodes the received signal and outputs an IP datagram.

A description will now be made of time slicing used for reducing power consumption of the receiver in the DVB-H system.

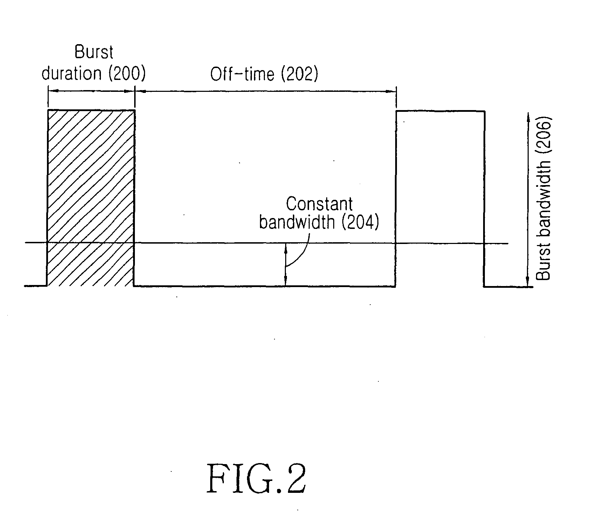

FIG. 2 is a conceptual diagram illustrating a time slicing-based transmission method in a DVB-H system to which the first embodiment of the present invention is applicable. The time slicing technique, instead of continuously transmitting data with the passage of time as shown by reference numeral 204, transmits data for a short time duration called a burst duration 200 by instantaneously using a high data rate as shown by reference numeral 206, and transmits no data in an OFF-time 202, or the burst duration-excluded duration. A predetermined duration for which particular broadcast service data is transmitted is called a 'burst', and in the OFF-time duration 202 between bursts, data of different broadcast services shares the same frequency band in the burst form and is TDM-transmitted.

A transmission time of the particular broadcast service data is defined as the burst duration 200, and a time between bursts is defined as the OFF-time 202. In this manner, the DVB-H system can transmit multiple broadcast services in one band as a whole, and can provide a data rate of 8 ~ 31 Mbps per frequency band.

The DVB-H receiver receives broadcast signals using the time slicing technique in this manner, thereby reducing its battery power consumption.

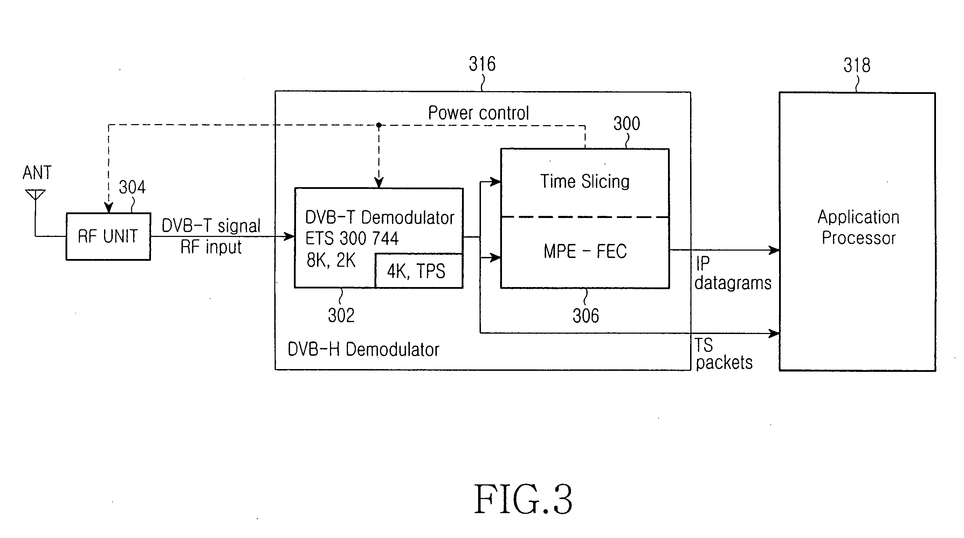

FIG. 3 is a block diagram illustrating a structure of a general DVB-H receiver to which the first embodiment of the present invention is applicable.

A Radio Frequency (RF) unit 304 receives a radio signal received via an antenna, and outputs the received signal to a DVB-H demodulator 316. In the DVB-H demodulator 316, a DVB-T demodulator 302 demodulates the received signal, and outputs the demodulated signal to an MPE-FEC processor 306 if it is MPE-FEC-processed data, and outputs the demodulated signal to an application processor 318, or a processing unit, if it is non-MPE-processed data. The application processor 318 and processing unit will be used herein as the same meaning. In addition, the DVB-T demodulator 302 provides information on time slicing to a time slicing controller 300 depending on TPS. The application processor 318 provides the data output from the DVB-H demodulator 316 to the user through an undepicted display.

However, the time slicing controller 300 performs a power control operation on the RF unit 304, the DVB-T demodulator 302 and the MPE-FEC processor 306 such that they operate only in the corresponding burst duration, thereby reducing power consumption of the receiver. That is, the DVB-H receiver selects one of TDM-multiplexed broadcast services, and receives only the time-sliced burst, thereby reducing power consumption of the receiver.

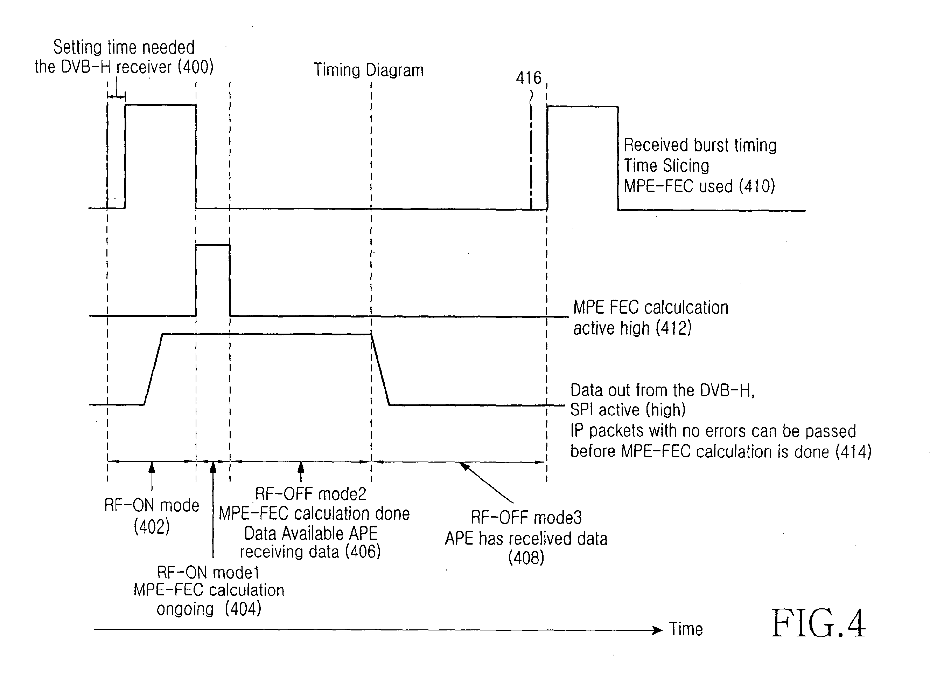

FIG. 4 is a timing diagram illustrating an operation time and a burst reception time of each individual block in a DVB-H receiver.

Reference numeral 400 denotes a timing margin for which the RF unit 304 is turned ON before the burst starts, and indicates the time needed for stabilization of RF. An RF-ON mode denoted by reference numeral 402 is a duration for which the DVB-H receiver receives its particular desired burst under the power control by time slicing. In durations denoted by reference numeral 404, 406 and 408, because there is no burst that the DVB-H receiver desires to receive, the DVB-H receiver disables the RF unit 304 and the DVB-T demodulator 302 by time slicing. In the duration 404, the DVB-H receiver performs an MPE-FEC decoding operation to perform an operation of additionally correcting a reception error. In the duration 406, the DVB-H receiver performs an operation of receiving an IP datagram (or IP packet) at an Application Processor Engine (APE). For the duration 408, the DVB-H receiver performs an operation in which after it takes all IP datagram needed at the APE, the entire DVB-H demodulation operation is turned OFF.

Reference numeral 410 denotes the timing at which MPE-FEC is used and the time-sliced burst is received, and reference numeral 412 denotes the timing at which MPE-FEC processing is performed. Reference numeral 414 denotes the timing at which the DVB-T demodulator 302, or a baseband processor, receives a DVB-H signal and transfers an IP packet to the APE, and reference numeral 416 denotes an RF-ON time at which the RF unit 304 and the DVB-T demodulator 302, or the baseband processor, should be enabled slightly before the burst starts, and the RF-ON time is needed for RF stabilization.

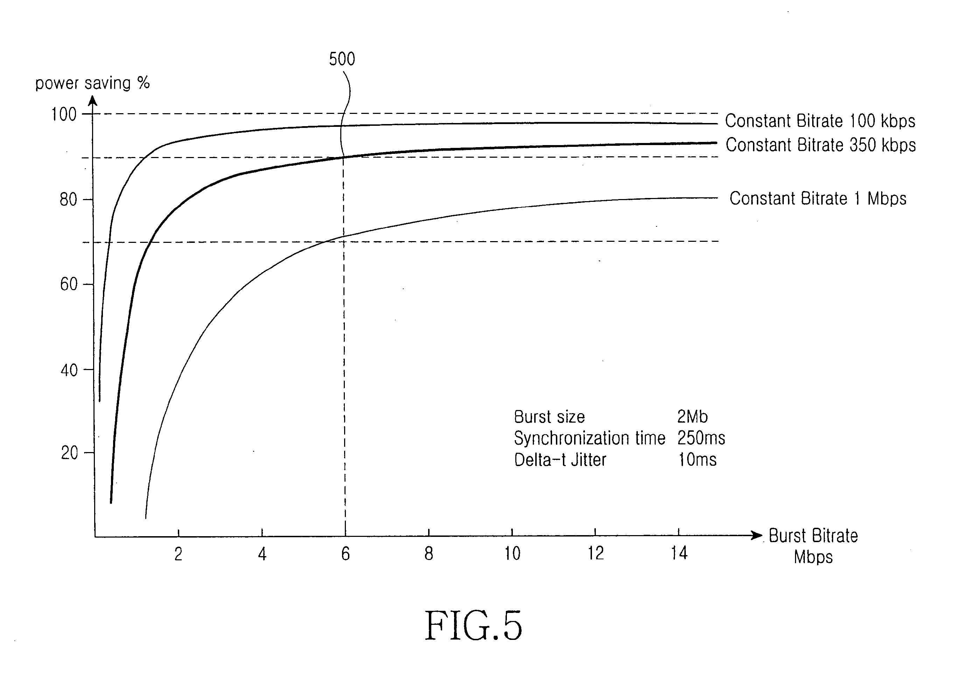

FIG. 5 is a graph illustrating a reduction in power consumption with respect to a data rate in a DVB-H system where a DVB-H receiver uses time slicing.

As shown by a curve 500, when the DVB-H system uses a burst bit rate of 6 Mbps or higher, it can obtain an effect of power consumption reduction of 90%. However, when a cycle at which a burst of a particular service occurs is defined as a burst cycle time, a reduction in the burst cycle time causes frequent occurrence of the burst duration, increasing the RF-ON time 402. Therefore, the increase in the RF-ON time 402 tends to increase the receiver's battery consumption. Meanwhile, the broadcast channel switching time for the case where several broadcast services are TDM-transmitted using the time slicing technique, depends on the burst cycle time.

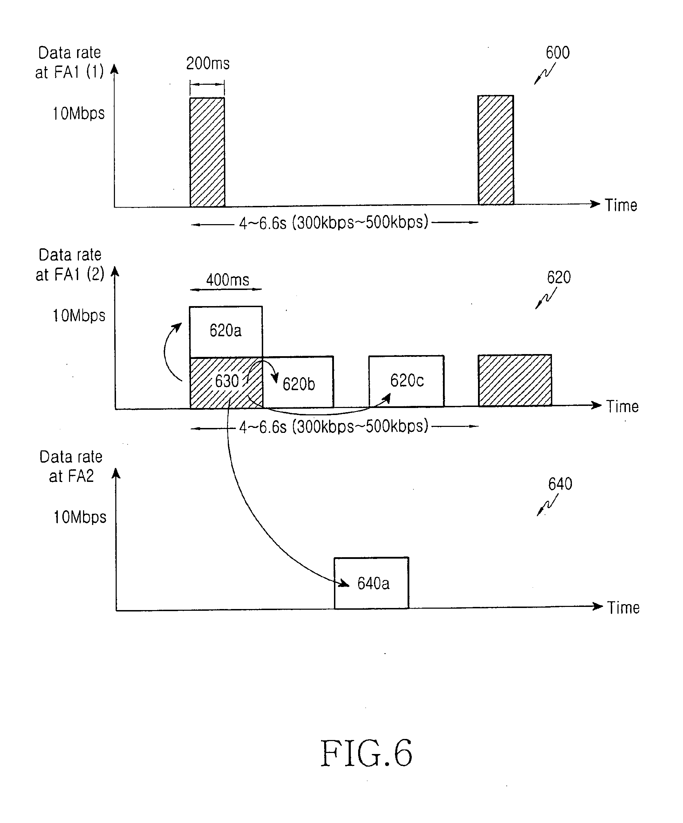

FIG. 6 is a diagram illustrating three channel switching scenarios separately provided to estimate a broadcast channel switching time according to the first embodiment of the present invention.

In FIG. 6, reference numeral 600 denotes the case where one broadcast service is transmitted per burst, for example, at a 10-Mbps data rate. In this case, because the maximum number of assumed bits that one burst uses is 2 Mbit, the burst duration is calculated as 200 ms. As a result, it can be noted that when a broadcast service data rate is assumed to be 300 kbps ~ 500 kbps, a length between bursts is 200ms x 10Mbps / (300kbps ~ 500kbps) = 4 ~ 6.6 sec.

Reference numeral 620 denotes the case where there are two broadcast services per burst. In this case, it can be seen that the maximum data rate used per service decreases to 5 Mbps, whereas the burst duration becomes 400 ms, which is two times the burst duration shown by reference numeral 600. However, because a data rate required per service is constant to 300 ~ 500 kbps, an interval between bursts becomes 4 ~ 6.6 sec without change. That is, it can be noted that if the amount of data used per burst remains constant, the burst cycle time, or the interval between bursts, also remains constant. As described above, because the maximum data rate will remain at 10 Mbps and the maximum data rate used per service will reduce to 1/2, the burst cycle time remains constant.

A channel switching scenario based on the DVB-H receiver to which the first embodiment of the present invention is applicable can be divided as shown by reference numerals 620 and 640 of FIG. 6, and descriptions thereof will now be made separately.
1. In reference numeral 620, an arrow from reference numeral 630 to reference numeral 620a indicates switching to another broadcast service channel in the burst where a broadcast service is currently received.
2. In reference numeral 620, an arrow from reference numeral 630 to reference numeral 620b and an arrow to reference numeral 620c indicate switching to another broadcast service channel in the same frequency as that of the burst where a broadcast service is currently received.
3. In reference numeral 640, an arrow from reference numeral 630 to reference numeral 640a indicates switching to another broadcast service channel in the burst that uses a different frequency from that of the burst where a broadcast service is currently received.

A channel switching time for each of the foregoing 3 scenarios can be estimated as follows.
1. In reference numeral 600, because the channel switching is made in the same burst, the channel switching time is 0.
2. In reference numeral 620, because the switching is made to another broadcast service channel in the same frequency, several ms (milliseconds) to a maximum of 4 ~ 6.6 sec is required. That is, the channel switching to the burst 620b close to the current burst 630 needs a short channel switching time, but the channel switching to the burst 620c far from the current burst 630 needs a maximum of 4 ~ 6.6 sec. The channel switching, assuming that it occurs randomly, needs 2 ~ 3.3 sec on average.
3. For the switching to a broadcast service channel in a different frequency as shown by reference numeral 640a in reference numeral 640, because several tens of ms is used for switching the frequency and then performing initial synchronization and the following is equal to the scenario 2, 2 ~ 3.3 sec is required on average.

Therefore, it can be noted that when the time required for data processing in an A/V co-dec is assumed to be 2 sec and the amount of transmission data of the burst is assumed to be 2 Mbit, the required final channel switching time is 4 ~ 5.5 sec on average, and is a maximum of 6 ~ 8.6 sec. As described above, the channel switching time has a close relationship with the burst cycle time, and an increase in the burst cycle time causes an increase in the channel switching time. When the receiver of the general DVB-H system performs broadcast channel switching in the process of receiving a particular TDM-transmitted broadcast service, an increase in the burst cycle time brings about an increase in the channel switching time. In addition, a decrease in the burst cycle time leads to an increase in power consumption of the receiver. That is, there is a trade-off relationship between the channel switching time based on the burst cycle time and the power consumption of the receiver.

Therefore, even though reducing the broadcast channel switching time in the broadcast service and reducing the power consumption of the receiver are very important issues, it is not possible to simultaneously address the two issues with the receiver of the general DVB-H system due to the burst cycle time.

To solve the foregoing problems, the present invention provides herein a scheme in which a DVB-H receiver reduces the time required for broadcast channel switching without depending on the burst cycle time, without modification of the DVB-H receiver. In addition, taking into account a characteristic of portable mobile broadcasting, the present invention provides a scheme of not increasing the power consumption even while reducing the channel switching time, thereby increasing the receiver's battery time and thus increasing user's satisfaction.

The DVB-H receiver according to the first embodiment of the present invention uses a method of storing data between bursts in a memory to reduce channel switching time without depending on the burst cycle time as described above.

Although the first embodiment of the present invention will be described herein on the assumption that it is applied to the DVB-H system, the embodiment can be applied to all broadcasting systems supporting TDM-based broadcast service.

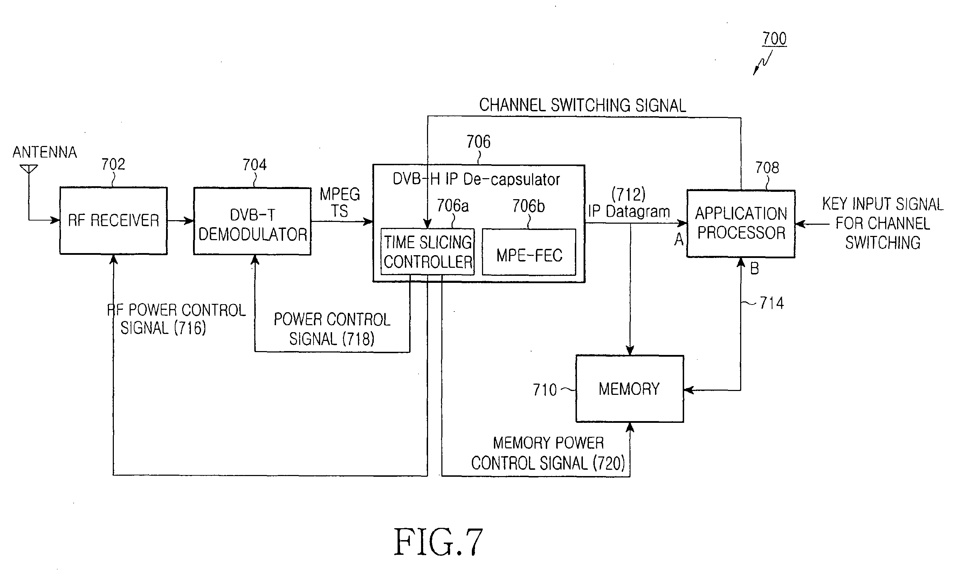

FIG. 7 is a block diagram illustrating a structure of a DVB-H receiver 700 for providing a broadcast service according to the first embodiment of the present invention.

As illustrated in FIG. 7, a DVB-H signal is output to a DVB-T demodulator 704 corresponding to a DVB-H physical layer through an antenna and an RF receiver 702. The DVB-T demodulator 704 is also called a data demodulator, and the DVB-T demodulator 704 and the data demodulator will be used herein as the same meaning.

The DVB-T demodulator 704 demodulates a signal according to a predetermined mode such as 2K/4K/8K-FFT modes, and delivers the modulated signal to a DVB-H IP decapsulator 706 in the form of MPEG-2 Transport Stream (TS). Although not illustrated in the drawing, the DVB-T demodulator 704 includes therein a Fast Fourier Transform (FFT) unit for transforming the OFDM symbols down-converted and digital-converted by the RF receiver 702 into a frequency-domain signal, a symbol demapper for symbol-demapping a received signal according to a predetermined modulation scheme such as Quadrature Phase Shift Keying (QPSK), 16-ary Quadrature Amplitude Modulation (16QAM) or 64QAM, a symbol deinterleaver for performing symbol-based deinterleaving and bit-based deinterleaving, a bit deinterleaver and a channel decoder.

The DVB-H IP decapsulator 706 includes a time slicing controller 706a for performing time slicing according to a transmission parameter signal demodulated by the DVB-T demodulator 704, and an MPE-FEC processor 706b for performing MPE-FEC decoding when the received data is MPE-FEC-coded data. If the DVB-H system does not support MPE-FEC, the DVB-H IP decapsulator 706 may not include the MPE-FEC processor 706b.

The time slicing controller 706a repeats a switching operation of a power control signal with the RF receiver 702 and the DVB-T demodulator 704 so that it may receive an MPE-FEC frame-included TS packet or an MPE frame-included TS packet every predetermined burst duration. Herein, as the duration between bursts is included in a header of each MPE section and MPE-FEC section, the time slicing controller 706a can check it by receiving information on a delta 't' indicating a start time of the next burst duration. The 'switching operation' of the time slicing controller 706a as used herein refers to an operation of controlling the RF receiver 702 and the DVB-T demodulator 704 so that they operate only in the burst duration of the corresponding broadcast service. That is, the time slicing controller 706a provides a power control signal for disabling operations of the RF receiver 702 and the DVB-T demodulator 704 in the OFF-time duration, and enabling the operations only in the burst duration.

As for the MPEG-2 TS signal demodulated by the DVB-T demodulator 704, only the TS packet having a Packet Identifier (PID) of a broadcast service selected by means of the time slicing controller 706a is selected and input to the MPE-FEC processor 706b. The MPE-FEC processor 706b performs an MPE-FEC decoding process on the received TS packet. That is, after performing PID filtering, if a packet identifier from header information of the TS packet indicates a packet for transmitting an MPE section or an MPE-FEC section, the MPE-FEC processor 706b considers that an MPE section or an MPE-FEC section has been received. Otherwise, the MPE-FEC processor 706b receives (extracts) Program Specific Information/Service Information (PSI/SI; hereinafter referred to as 'broadcast service information') from the TS packet, and receives broadcast reception-related service information such as time slicing and application/non-application of MPE-FEC depending thereon. After the decoding, the MPE-FEC processor 706b outputs an IP datagram 712 to an application processor 708, or a processing unit. As described above, when time slicing is used in the general DVB-H system, the RF receiver 702 and the DVB-T demodulator 704, or the baseband processor, are enabled in the burst duration, and disabled in the OFF-time duration 202.

Aside from the time slicing for the DVB-H system, the present invention provides a new scheme. That is, the present invention uses a scheme of storing data between burst durations in a separate memory 710 in order to perform channel switching without depending on the burst cycle time. The memory 710 is a memory for storing the data that the application processor 708 will output through a display, and a memory power control signal 720 is a signal for turning ON a memory in a concentrated channel switching mode where an operation for channel selection occurs by a user, and turning OFF the memory in a selected channel viewing mode where the user views a selected broadcast channel, and the memory power control signal 720 is output from the time slicing controller 706a. In the concentrated channel switching mode, demodulated IP datagram or MPE data is stored in the memory 710.

In the first embodiment of the present invention shown in FIG. 7, access to the memory 710 is controlled by the time slicing controller 706a. Therefore, the application processor 708 or an undepicted controller in DVB-H IP decapsulator 706 can determine when it should access the memory 710 and store the demodulated broadcast data therein.

The broadcast data demodulated in the DVB-T demodulator 704 can be processed by the application processor 708 or an undepicted controller (CPU) of DVB-H receiver and then provided to the user.

The MPE-FEC processor 706b is a block necessary for improving reception performance by additionally correcting an error possibly occurring in the channel, and for securing robustness against deterioration of reception environment due to the moving velocity of the receiver. As for an error correction code used for the additional error correction, the MPE-FEC processor 706b uses an RS code, and in this manner, the terminal can be guaranteed reception performance for a broadcast signal even with use of only one reception antenna.

That is, the embodiment of the present invention demodulates not only the burst that it desires to receive, but also the data between desired bursts, i.e. the broadcast data on another channel, which is a burst received during OFF-time, and previously stores the demodulated data in the memory 710. Upon receipt of a key input for channel switching from the user, the application processor 708 checks the memory 710 to determine whether there is any broadcast data in the memory 710, that the user desires to view, and outputs a channel switching signal to the time slicing controller 706a according to the check result.

Upon receipt of a key input for channel switching from the user, the application processor 708 checks the memory 710, and if there is data of a broadcast signal selected by the user, the application processor 708 reads the IP datagram 712 stored in the memory 710, performs audio/video decoding thereon, and outputs the resulting data to the user through an undepicted display, thereby facilitating a reduction in the channel switching time.

After performing audio/video decoding on the IP packet stored in the memory 710 after its channel switching, the application processor 708 performs audio/video decoding on the IP datagram 712 obtained by demodulating the data received (extracted) from the burst wirelessly transmitted every burst duration, and then outputs the resulting data to the user through the display.

In this case, however, the DVB-H receiver should continuously demodulate the DVB-H signal which is transmitted from the transmitter after time slicing, causing a considerable increase in power consumption thereof. Therefore, in the present invention, the time slicing controller 706a of the DVB-H receiver further includes a time slicing control function based on a key input pattern of the user to make it possible to reduce the power consumption.

The present invention will provide two operation modes of the time slicing controller 706a. The time that the user concentratively switches the channel will be defined herein as a 'concentrated channel switching time' and the duration for which the user views its selected channel will be defined as a 'selected channel viewing time'.

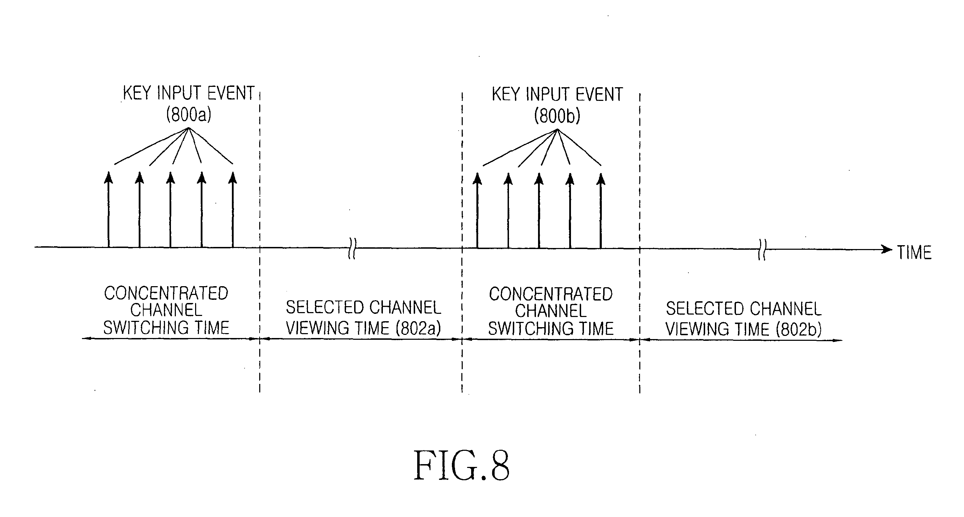

As a result of investigating the key input pattern of the DVB-H receiver's user, it is known that the key input pattern of the user desiring to view the broadcast service generally shows an aspect that after an end of the current broadcast program, the user concentratively attempts channel switching several times, and if the user selects a broadcast program that he/she desires to view, the user views the selected broadcast program for quite a long time without channel switching. Even in the course of the broadcast program, channel switching can happen, and once the channel switching is attempted, the user attempts the channel switching several times as described above. Therefore, the key input pattern of the user can be generalized as shown in FIG. 8.

FIG. 8 is a diagram illustrating a key input pattern of a broadcast receiver's user according to an embodiment of the present invention.

In FIG. 8, reference numerals 800a and 800b each denote occurrence of a key input event from the user, and each of these parts is the concentrated channel switching time. Reference numeral 802a and 802b each denote the selected channel viewing time, or the duration in which a selected broadcast channel is provided to the user. The user of the DVB-H receiver 700 continuously attempts channel switching several times by inputting a broadcast-related key including a channel switching key such as a direction key, a hot key used for directly switching to another broadcast channel, a channel selection key such as numeral keys, an Electronic Program Guide (EPG) selection key, and a volume control-related key. If the channel that the user desires to view is selected, the user views the selected channel for quite a long time without channel switching.

In the present invention, a group of the channel switching key such as the direction key input from the user for channel switching, and the keys used for receiving a broadcast service, including the EPG selection key, the hot key, the numeral key and the volume-control key, will be referred to as 'broadcast-related keys', and among the broadcast-related keys, the channel selection-related keys including the channel switching key such as the direction key, the hot key and the numeral key will be referred to as 'channel selection key'. The broadcast-related key may include not only the physical key input from a device, but also the soft key input from a touch screen.

Therefore, the present invention provides a scheme in which as shown in FIG. 8, in the 'concentrated channel switching time' durations 800a and 800b, the time slicing controller 706a receives and demodulates all broadcast channels regardless of burst duration, and stores the resulting data in the memory 710, and in the 'selected channel viewing time' durations 802a and 802b, the time slicing controller 706a reduces power consumption using the general time slicing. That is, in the selected channel viewing times 802a and 802b, the time slicing controller 706a receives data only in the burst duration of the corresponding broadcast service. In other words, the time slicing controller 706a transfers an RF power control signal 716 to the RF receiver 702 and a power control signal 718 to the DVB-T demodulator 704 so that in the concentrated channel switching times 800a and 800b, the RF receiver 702 and the DVB-T demodulator 704 receive and demodulate the broadcast signal even in the corresponding burst duration unlike in the general time slicing operation. In addition, the time slicing controller 706a transfers the memory power control signal 720 to the memory 710 to store therein the broadcast data demodulated in the concentrated channel switching times 800a and 800b. That is, in the concentrated channel switching time, if there is broadcast data of a user-selected channel in the memory 710, the application processor 708 reads the data stored in the memory 710 as shown be reference numeral 714, and provides the read data to the user. In the selected channel viewing time, the application processor 708 receives an IP datagram 'A' of a broadcast signal received every burst duration, other than the IP datagram stored in the memory 710, and provides the received IP datagram to the user.

Because the concentrated channel switching time durations 800a and 800b are generally very shorter than the selected channel viewing time durations 802a and 802b, the entire power consumption of the receiver is almost equal to the power consumption of the general time slicing-based DVB-H receiver. That is, in FIG. 7, upon receipt of a key input for channel switching from the user, the application processor 708 outputs a channel switching signal to the time slicing controller 706a. Upon receipt of the channel switching signal from the application processor 708, the time slicing controller 706a controls the RF receiver 702 and the DVB-T demodulator 704 to demodulate to the broadcast data regardless of the burst duration, and to store the demodulated broadcast data in the memory 710. If the time slicing controller 706a fails to receive the channel switching signal from the application processor 708 for a predetermined time, it controls the RF receiver 702 and the DVB-T demodulator 704 to operate every burst duration corresponding to the broadcast channel selected by the user.

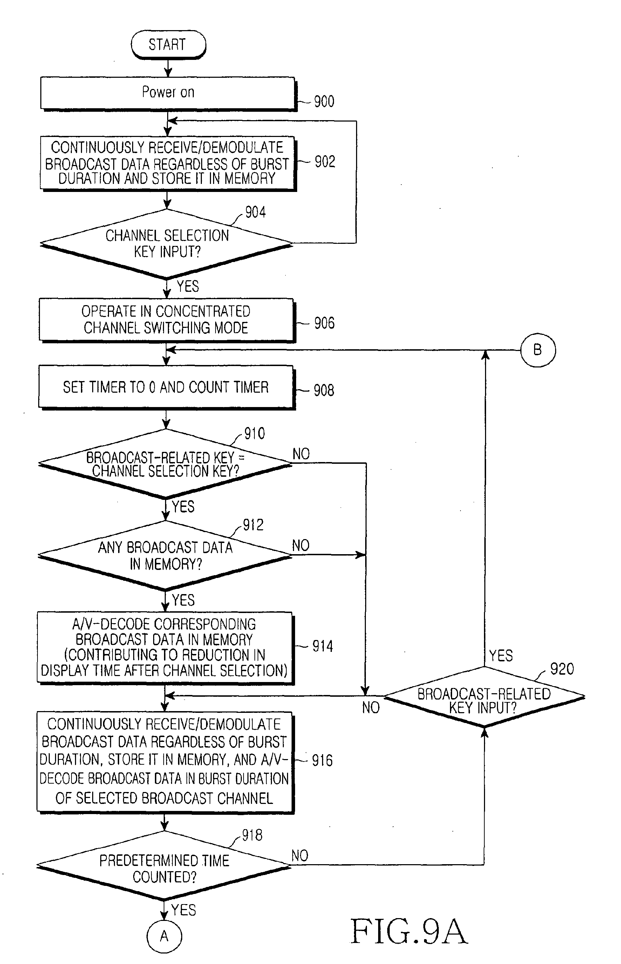

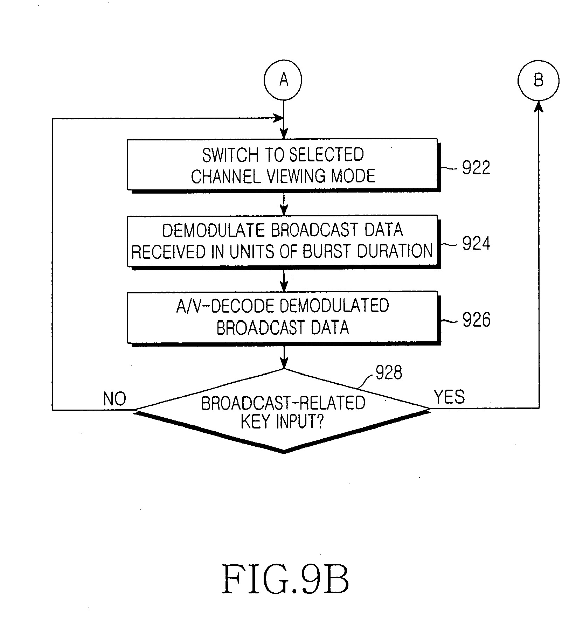

FIGs. 9A and 9B are flowcharts illustrating a method for demodulating a broadcast signal in a DVB-H receiver 700, or a portable digital broadcasting receiver, according to the first embodiment of the present invention.

In step 900, the DVB-H receiver 700 performs a power-on operation upon receipt of a power key input from the user. In step 902, the DVB-H receiver 700 demodulates IP packets received in all burst durations and stores the demodulated IP packets in a memory 710, while operating in a continuous reception mode other than in the time slicing mode defined in DVB-H. If it is determined in step 904 that the key input from the user is a channel selection key, the DVB-H receiver 700 operates in the concentrated channel switching mode in step 906. In the concentrated channel switching mode of step 906, a time slicing controller 706a of the DVB-H receiver 700 initializes to '0' a timer for counting the time for switching from the concentrated channel switching mode to the selected channel viewing mode, and then increases the timer in step 908. Thereafter, if it is determined in step 910 that a broadcast-related key that an application processor 708 has previously received is a channel selection key, the DVB-H receiver 700 determines in step 912 whether burst data of the corresponding channel exists in the memory 710. That is, if the DVB-H receiver 700 has received the channel selection key in step 904, the DVB-H receiver 700 directly proceeds from step 910 to step 912 where it determines again whether the key input in step 904 is a channel selection key. However, if it is determined in step 910 that the input broadcast-related key is not a channel selection key, the DVB-H receiver 700 proceeds to step 916.

If it is determined in step 912 that data of the corresponding channel exists in the memory 710, the application processor 708 of the DVB-H receiver 700 reads the data from the memory 710, and performs audio/video (A/V) decoding thereon in step 914. However, if it is determined in step 912 that there is no data of the corresponding channel in the memory 710, the application processor 708 receives, in step 916, an IP packet from a decoded burst of the corresponding channel by means of the DVB-H RF receiver 702, the DVB-T demodulator 704 and the DVB-H IP decapsulator 706, and performs A/V decoding thereon. In step 916, the DVB-H receiver 700, because the current mode is the concentrated channel switching mode, continuously receives broadcast data regardless of burst duration, demodulates the received broadcast data, and stores the demodulated broadcast data in the memory 710. At the same time, the DVB-H receiver 700 performs audio/video decoding on the broadcast data currently selected by the user.

However, if it is determined in step 910 that another broadcast-related key other than the channel selection key is input, the application processor 708 of the DVB-H receiver 700, because the input key is not for channel switching, performs A/V decoding on the IP packet of the burst duration of the broadcast channel currently selected by the user in step 916.

The reduction effect of the channel switching time according to the first embodiment of the present invention can be achieved by the process in which upon receipt of a channel selection key or a channel switching key, the application processor 708 immediately performs A/V decoding on the IP packet of the corresponding burst stored in the memory 710. After outputting the IP packet of the corresponding burst stored in the memory 710, the application processor 708 receives an IP packet from the burst of the corresponding channel demodulated by means of the RF receiver 702 and the DVB-T demodulator 704, or a data demodulator, and then performs A/V decoding thereon.

In addition, the time slicing controller 706a of the DVB-H receiver 700 stores data of all bursts in the memory 710 to prepare for the case where there is an additional input of channel selection and switching keys while demodulating the IP packet from the burst of the corresponding channel of step 914. Further, in step 916, the DVB-H receiver 700 continuously receives and demodulates broadcast data regardless of burst duration, and stores the demodulated broadcast data in the memory 710, and at the same time, performs audio/video decoding on the broadcast data in the burst duration of the broadcast channel selected by the user.

In step 918, the time slicing controller 706a of the DVB-H receiver 700 determines whether the timer has counted a predetermined time after the timer initialization. If the timer has not counted the predetermined time yet, the application processor 708 of the DVB-H receiver 700 determines in step 920 whether a broadcast-related key is input. If it is determined in step 920 that no broadcast-related key is input, the DVB-H receiver 700 maintains the concentrated channel switching mode, performing step 916.

However, if a broadcast-related key is input in step 920 while the timer has not counted the predetermined time yet in step 918, the DVB-H receiver 700 returns back to step 908 and performs timer initialization and its succeeding process. If it is determined in step 918 that the timer exceeds the predetermined time, the DVB-H receiver 700 proceeds to step 922 where it switches to the selected channel viewing mode.

In the concentrated channel switching mode of the present invention, each time there is a broadcast-related key input such as a channel switching request or a channel selection request from the user, the time slicing controller 706a sets the timer to '0' as done in step 908. Further, in the concentrated channel switching mode, the time slicing controller 706a controls the RF receiver 702 and the DVB-T demodulator 704, or the data demodulator, to continuously operate as done in step 916, and stores the demodulated IP datagram in the memory 710.

If there is a lack of the storage space in the process of storing the IP datagram in step 902 and 916, the time slicing controller 706a of the DVB-H receiver 700 deletes the data part first stored in the memory 710, and stores the newly demodulated IP datagram in the memory 710.

However, if it is determined in step 918 that the timer has counted the predetermined time, the DVB-H receiver 700 switches to the selected channel viewing mode in step 922. In step 924, the RF receiver 702 and the DVB-T demodulator 704, under the control of the time slicing controller 706a, demodulate broadcast data received in units of burst duration. In step 926, the application processor 708 performs A/V decoding on the demodulated broadcast data.

In step 928, the DVB-H receiver 700 determines whether a broadcast-related key is input, while operating in the selected channel viewing mode. If it is determined in step 928 that the broadcast-related key is input, the DVB-H receiver 700 returns to step 908 and operates back in the concentrated channel switching mode.

The switching from step 928 to step 908, i.e. the switching from the selected channel viewing mode to the concentrated channel switching mode is performed when a broadcast-related key input is achieved by the user, and the foregoing process is repeated for the switching.

In FIGs. 9A and 9B, the switching from the concentrated channel switching mode to the selected channel viewing mode is achieved when the timer of the time slicing controller 706a is greater than the maximum channel switching time Max_Channel_Switching_Time as done in step 918. That is, if there is no additional broadcast-related key input for the maximum channel switching time after the channel switching signal was last received from the user, the DVB-H receiver 700 switches to the selected channel viewing mode of step 922, determining that the user fixedly views the user-selected broadcast channel. In the selected channel viewing mode of steps 924 and 926, the RF receiver 702 and the DVB-T demodulator 704 operate every burst duration as described above, under the control of the time slicing controller 706a. The switching from the concentrated channel switching mode of step 906 to the selected channel viewing mode of step 922 is performed when there is a broadcast-related key input from the user, and the foregoing process is repeated for the switching.

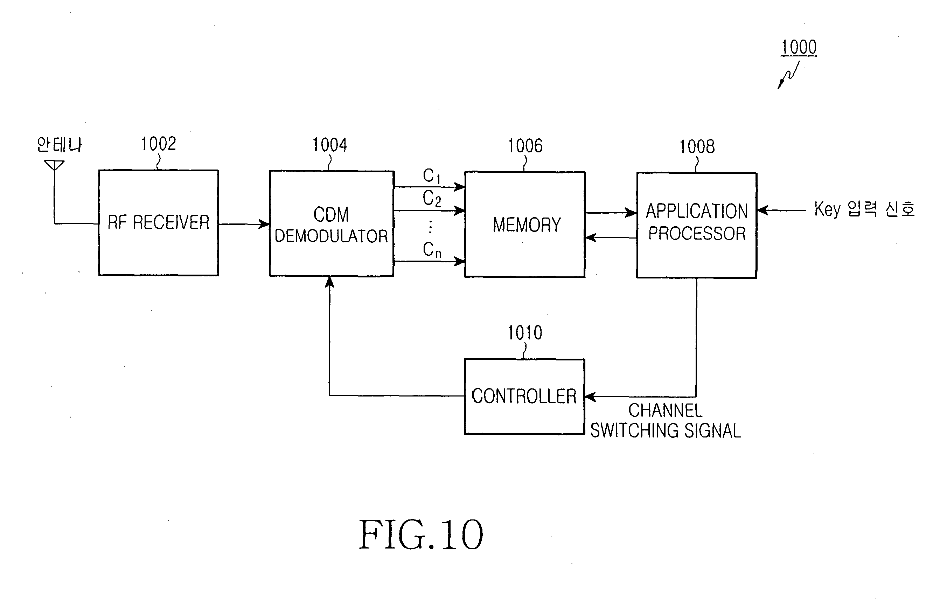

FIG. 10 is a block diagram illustrating a structure of a CDM-based portable digital broadcasting receiver 1000, or a satellite DMB receiver, to which a second embodiment of the present invention is applicable.

An RF receiver 1002 down-converts a signal received via an antenna, and outputs the down-converted signal to a CDM demodulator 1004. The CDM demodulator 1004 demodulates a broadcast signal by multiplying the received signal by a predetermined spreading code.

Generally, the CDM demodulator 1004 demodulates only the broadcast service selected by multiplying a broadcast signal selected under the control of a controller 1010 by a corresponding spreading code, and outputs the demodulated data to a memory 1006. However, in the second embodiment of the present invention, in the concentrated channel switching times 800a and 800b of FIG. 8, the CDM demodulator 1004 demodulates n broadcast data (or n broadcast channels) received via the antenna by multiplying the received broadcast signals by n spreading codes, and outputs the demodulates broadcast data to the memory 1006.

However, in the selected channel viewing times 802a and 802b in which a channel is selected by the user, in order to demodulate only the currently selected broadcast signal as done in the general operation, the CDM demodulator 1004 multiplies the selected broadcast signal by only the spreading code for demodulation, and outputs the demodulated data to the memory 1006.

The memory 1006 stores the broadcast data demodulated according to the selected channel viewing time or the concentrated channel switching time, and outputs the broadcast data selected during the selected channel viewing time out of the stored broadcast data, to an application processor 1008. The application processor 1008 performs audio/video decoding on the broadcast data, and outputs the resulting data to an undepicted display. When a key input event happens as there is a broadcast-related key input signal from the user, the application processor 1008 transfers a channel switching signal to the controller 1010 to order the receiver to operate according to the concentrated channel switching mode.

Upon receipt of the channel switching signal from the application processor 1008, the controller 1010 controls the CDM demodulator 1004 to demodulate n (where n is an integer greater than 1) broadcast data by multiplying the broadcast signals received at the RF receiver 1002 by the n spreading codes one by one.

If no key input event happens for a predetermined time, i.e. if there is no channel switching signal received, the controller 1010 controls the CDM demodulator 1004 to stop demodulating the n broadcast data and to demodulate only the broadcast data selected by the user.

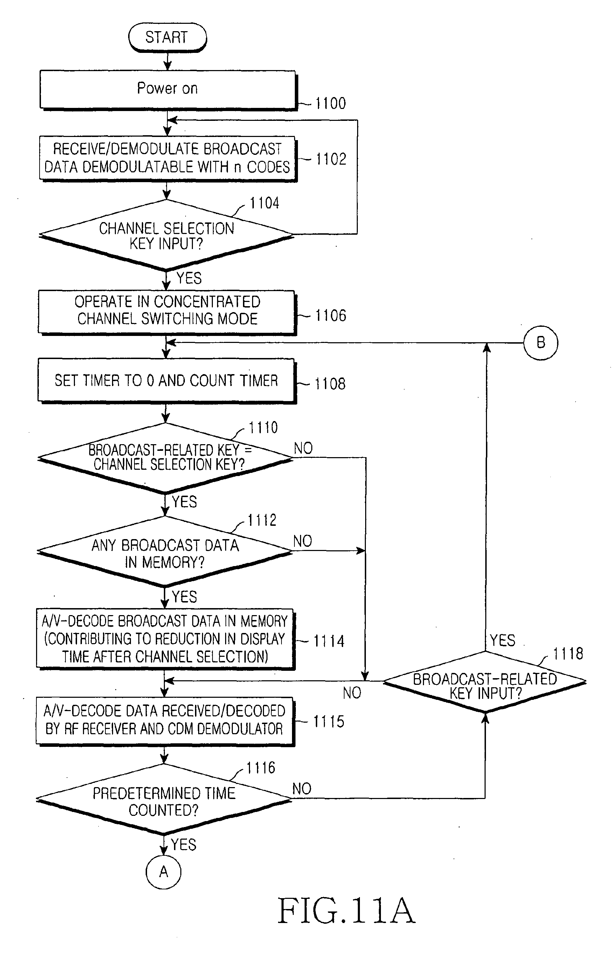

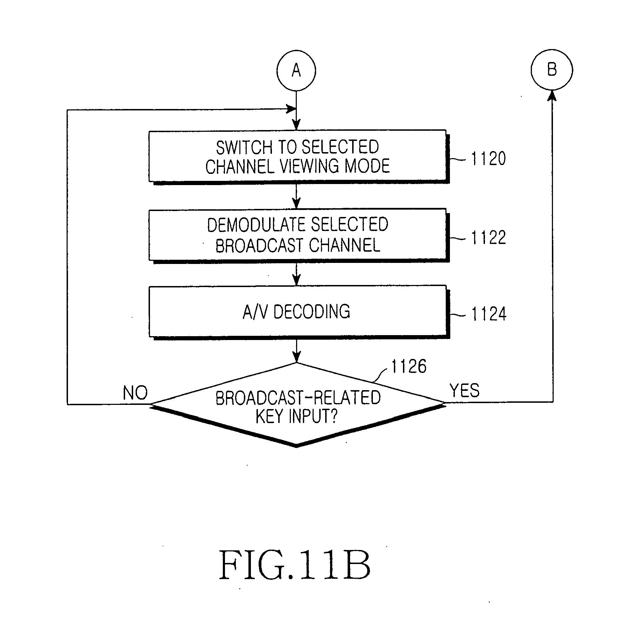

FIGs. 11A and 11B are flowcharts illustrating a method for demodulating a broadcast signal in a portable digital broadcasting receiver according to the second embodiment of the present invention.

In step 1100, the CDM-based portable digital broadcasting receiver 1000 performs a power-on operation upon receipt of a power key input from the user. In step 1102, the portable digital broadcasting receiver 1000 receives and demodulates broadcast data demodulatable with n spreading codes. If it is determined in step 1104 that a channel that the user desires to view is selected, the portable digital broadcasting receiver 1000 operates in the concentrated channel switching mode. Upon receipt of a broadcast-related key input from the user, the portable digital broadcasting receiver 1000 can enter the concentrated channel switching mode of step 1106.

In the concentrated channel switching mode, a controller 1010 of the portable digital broadcasting receiver 1000 proceeds to step 1108 where it initializes to '0' a timer for counting the time for switching to the selected channel viewing mode, and then increases the timer. Thereafter, if it is determined in step 1110 that the broadcast-related key input signal is a channel selection key, the portable digital broadcasting receiver 1000 determines in step 1112 whether there is burst data of a corresponding channel in a memory 1006.

If it is determined in step 1112 that there is data of the corresponding channel in the memory 1006, an application processor 1008 of the portable digital broadcasting receiver 1000 performs A/V decoding on the data. However, if it is determined in step 1112 that there is no data of the corresponding channel in the memory 1006, the portable digital broadcasting receiver 1000 proceeds to step 1115 where it performs A/V decoding on the data of the corresponding channel received/demodulated by means of the RF receiver 1002 and the CDM demodulator 1004.

If it is determined in step 1110 that another broadcast-related key other than the channel selection and switching keys is input, the application processor 1008 of the portable digital broadcasting receiver 1000, because the input key is not for channel switching, proceeds to step 1115 where it performs A/V decoding on the data of the corresponding channel currently received/demodulated by means of the RF receiver 1002 and the CDM demodulator 1004.

The reduction effect of the channel switching time, as described above, can be achieved by the process in which upon receipt of a channel selection key input, the application processor 1008 immediately performs A/V decoding on the data of the selected broadcast channel stored in the memory 1006. After outputting the selected broadcast data stored in the memory 1006 after channel switching, the application processor 1008 performs A/V decoding on the data received/demodulated by means of the RF receiver 1002 and the CDM demodulator 1004.

In step 1114, the controller 1010 stores all broadcast data demodulatable with n spreading codes in the memory 1006 to prepare for the case where there is an additional input of channel selection and switching keys while demodulating the data of the corresponding channel selected by the user.

If it is determined in step 1116 that the timer initialized in step 1108 has not counted a predetermined time yet, the portable digital broadcasting receiver 1000 determines in step 1118 whether there is a broadcast-related key input.

If it is determined in step 1118 that there is no broadcast-related key input, the portable digital broadcasting receiver 1000 maintains the concentrated channel switching mode, performing step 1115.

However, if a broadcast-related key is input in step 1118 while the timer has not counted the predetermined time yet in step 1116, the portable digital broadcasting receiver 1000 returns back to step 1108 and performs timer initialization and its succeeding process. However, if it is determined in step 1116 that the timer exceeds the predetermined time, the portable digital broadcasting receiver 1000 proceeds to step 1120 where it switches to the selected channel viewing mode.

After switching to the selected channel viewing mode in step 1120, the RF receiver 1002 and the CDM demodulator 1004 of the portable digital broadcasting receiver 1000 demodulate the broadcast channel currently selected by the user in step 1122. In step 1124, the application processor 1008 performs A/V decoding on the broadcast channel demodulated in step 1122.

In step 1126, the portable digital broadcasting receiver 1000 determines whether there is a broadcast-related key input, while operating in the selected channel viewing mode. If it is determined in step 1126 that the broadcast-related key is input, the portable digital broadcasting receiver 1000 returns to step 1108 and operates back in the concentrated channel switching mode.

The switching from step 1120 to step 1106, i.e. the switching from the selected channel viewing mode to the concentrated channel switching mode is performed when a broadcast-related key input is achieved by the user, and the foregoing process is repeated for the switching.

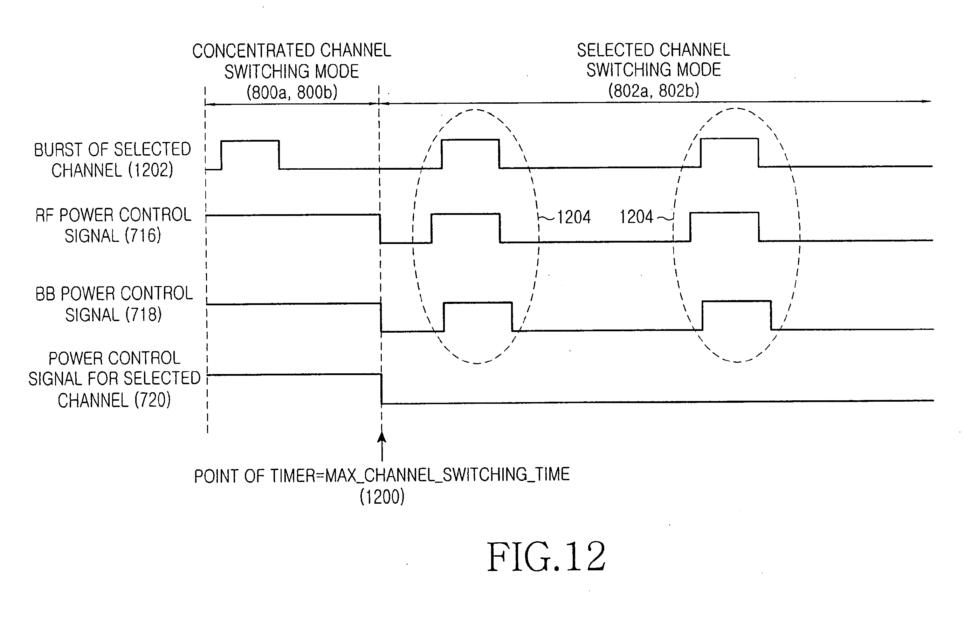

FIG. 12 is a timing diagram illustrating control signals of a time slicing controller 706a according to the first embodiment of the present invention. Shown in FIG. 12 are control signals of the time slicing controller 706a in FIG. 7. Reference numeral 1200 denotes the point at which the timer of the time slicing controller 706a has fully counted the maximum channel switching time. That is, reference numeral 1200 denotes the point at which switching from the concentrated channel switching mode 800a and 800b to the selected channel viewing mode 802a and 802b happens as there is no channel switching key input until the timer has counted the maximum channel switching time. Reference numeral 1202 denotes a burst period of a broadcast signal selected by the user.

In FIG. 12, in the concentrated channel switching mode 800a and 800b, the time slicing controller 706a enables the RF receiver 702 and the DVB-T demodulator 704 regardless of burst duration, and turns ON all of the RF power control signal 716, the power control signal 718 and the memory power control signal 720 to store the demodulated data in the memory 710. However, in the selected channel viewing mode 802a and 802b, the time slicing controller 706a allows the RF power control signal 716 and the power control signal 718 to perform the general time slicing operation, or to process data in units of bursts, only at the point 1204 where a burst duration of the selected channel starts, and allows the memory power control signal 720 to become an OFF state.

According to the embodiment of the present invention, the reason why the memory power control signal 720 is turned OFF in the selected channel viewing mode is because the memory is not used in the selected channel viewing mode. If the corresponding memory is used for another purpose during the selected channel viewing mode, an enable signal will be defined and used.

Although the first embodiment and the second embodiment of the present invention have been applied herein to the DVB-H system and the satellite DMB system, respectively, they are not limited to these broadcasting systems and can be applied to all broadcast receivers that perform channel switching in response to a key input from the user.

As described above, the DVB-H receiver 700 and the CDM-based portable digital broadcasting receiver 1000 according to the present invention previously demodulate and store broadcast data during their power-on, thereby preventing a time delay during channel switching. However, during the switching from the selected channel viewing mode to the concentrated channel switching mode, the reduction effect of the channel switching time reduces only at an initial stage, and when the channel switching continuously happens, there is no channel switching time delay because the concentrated channel switching mode is maintained. In order to minimize an initial delay occurring during the switching from the selected channel viewing mode to the concentrated channel switching mode, the present invention switches from the selected channel viewing mode to the concentrated channel switching mode the instant that any one of the broadcast-related keys other than the channel switching key is input.

As is apparent from the foregoing description, according to the present invention, the portable digital broadcasting receiver can reduce the power consumption and can also reduce the channel switching time.

While the invention has been shown and described with reference to a certain preferred embodiment thereof, it will be understood by those skilled in the art that various changes in form and details may be made therein without departing from the spirit and scope of the invention as defined by the appended claims.

## Claims

1. An apparatus for receiving broadcast data in a portable digital broadcasting receiver, the apparatus comprising:
a Radio Frequency (RF) receiver for receiving a broadcast signal;
a data demodulator for demodulating the broadcast signal; and
a controller for, upon receipt of a broadcast-related key from a user, controlling the data demodulator to operate in a concentrated channel switching mode and acquire, from the broadcast signal, data of all broadcast channels including a broadcast channel selected by the user, and upon failure to receive broadcast-related key for channel switching for a predetermined time, controlling the data demodulator to operate in a selected channel viewing mode and acquire data of the broadcast channel selected by the user from the broadcast signal.

2. The apparatus of claim 1, further comprising:
a memory for storing broadcast data demodulated by the data demodulator when the apparatus is in the concentrated channel switching mode; and
a processing unit for performing audio/video decoding on the selected broadcast data out of the broadcast data stored in the memory when the apparatus operates in the concentrated channel switching mode, and performing audio/video decoding on the broadcast data demodulated by the data demodulator when the apparatus operates in the selected channel viewing mode.

3. The apparatus of claim 1, wherein when the broadcast channels are received in different burst durations, the controller controls the RF receiver and the data demodulator to operate every burst duration of all broadcast channels, in the concentrated channel switching mode, and controls the RF receiver and the data demodulator to operate in a burst duration of broadcast data corresponding to the selected broadcast channel, in the selected channel viewing mode.

4. The apparatus of claim 3, wherein the portable digital broadcasting receiver is a Digital Video Broadcasting-Handheld (DVB-H) receiver.

5. The apparatus of claim 1, wherein when the broadcast channels are received by Code Division Multiplexing (CDM), the controller controls, in concentrated channel switching mode, the data demodulator to demodulate the broadcast channels by multiplying the received signals by spreading codes of all broadcast channels, and controls, in the selected channel viewing mode, the data demodulator to demodulate the selected broadcast channel by multiplying the received signals by a spreading code corresponding to the selected broadcast channel.

6. The apparatus of claim 5, wherein the portable digital broadcasting receiver is a receiver of a satellite Digital Multimedia Broadcasting (DMB) system.

7. The apparatus of claim 1, wherein the controller initializes a timer for counting a maximum channel switching time for switching to the selected channel viewing mode upon every receipt of the broadcast-related key, and switches to the selected channel viewing mode when the timer expires.

8. The apparatus of claim 1, wherein the broadcast-related key comprises a channel switching key, and keys used for receiving a broadcast service, wherein the channel switching key includes a direction key input for channel switching, and the keys used for receiving a broadcast service include a Electronic Program Guide (EPG) selection key, a hot key, and a numeral key.

9. A method for receiving broadcast data in a portable digital broadcasting receiver, the method comprising:
a first step of receiving a broadcast signal;
a second step of determining whether a broadcast-related key is input from a user;
a third step of, upon receipt of the broadcast-related key, demodulating the broadcast signal, and acquiring and storing broadcast data of all broadcast channels including a broadcast channel selected by the user; and
a fourth step of, upon failure to receive the broadcast-related key for a predetermined time, demodulating the broadcast signal and acquiring broadcast data of the broadcast channel selected by the user.

10. The method of claim 9, further comprising a fifth step of performing audio/video decoding on the broadcast data selected by the user out of the stored broadcast data.

11. The method of claim 9, further comprising a sixth step of performing audio/video decoding on the demodulated broadcast data.

12. The method of claim 9, wherein when the broadcast channels are received in different burst durations, the third step comprises demodulating the broadcast signal in all burst durations.

13. The method of claim 12, wherein the fourth step comprises demodulating the broadcast signal in a burst duration of a broadcast data corresponding to the broadcast channel selected by the user.

14. The method of claim 12 or 13, wherein the portable digital broadcasting receiver is a Digital Video Broadcasting-Handheld (DVB-H) receiver.

15. The method of claim 9, wherein when the broadcast channels are received by Code Division Multiplexing (CDM), the third step comprises demodulating the received signals by multiplying the received signals by spreading codes of all broadcast channels.

16. The method of claim 15, wherein the fourth step further comprises demodulating the broadcast signal by multiplying the received signals by a spreading code corresponding to the broadcast channel selected by the user.

17. The method of claim 15 or 16, wherein the portable digital broadcasting receiver is a receiver of a satellite Digital Multimedia Broadcasting (DMB) system.

18. The method of claim 9, wherein the broadcast-related key comprises a channel switching key, and keys used for receiving a broadcast service, wherein the channel switching key includes a direction key input for channel switching, and the keys used for receiving a broadcast service include a Electronic Program Guide (EPG) selection key, a hot key, and a numeral key.
